# EUROPÄISCHE PATENTSCHRIFT

(11) **EP 0 812 050 B1**
(45) Veröffentlichungstag und Bekanntmachung des Hinweises auf die Patenterteilung: **14.11.2001**
(21) Anmeldenummer: 97810282.0
(22) Anmeldetag: 06.05.1997
(51) Int. Cl.: H02K 3/52, H02K 1/17, H02K 21/44

(54) **Elektromotor**
Electric motor
Moteur électrique

(30) Priorität: 03.06.1996 DE 19622186
(43) Veröffentlichungstag der Anmeldung: 10.12.1997
(73) Patentinhaber: HILTI Aktiengesellschaft, 9494 Schaan (LI)
(72) Erfinder: Wissmach, Walter, 80637 München (DE); Kristen, Ferdinand, 82110 Germering (DE); Miescher, Stefan, 9492 Eschen (LI); Klein, Ernst, 86862 Lamerdingen (DE)
(74) Vertreter: Wildi, Roland

(56) Entgegenhaltungen:
- EP-A- 0 564 516
- EP-A- 0 605 247
- WO-A-91/11844
- FR-A- 2 126 691

## Beschreibung

Die Erfindung betrifft einen Elektromotor, gemäss dem Oberbegriff des Patentanspruchs 1.

Bei Elektromotoren mit ausgeprägten Statorpolen gibt es zwei Arten, die Statorwicklung in den Stator einzubringen. Einerseits ist es möglich, die Statorwicklung ausserhalb des Stators zu fertigen und anschliessend in den Stator auf die Statorpole aufzusetzen, andererseits ist es möglich, die Statorwicklung direkt in den aus einem Blechpaket bestehenden Stator einzuwickeln.

Elektromotoren, bei denen der Wickeldraht ausserhalb des Stators zu einer im wesentlichen ringförmigen Statorwicklung gefertigt wird, sind nicht wirtschaftlich herstellbar, da die einzelnen Arbeitsgänge bei dieser Fertigung sehr zeitintensiv sind und die Herstellung der für das Wickeln der Statorwicklung notwendigen Wickelvorrichtung mit hohen Kosten verbunden ist.

Elektromotoren, bei denen der Wickeldraht in den Stator eingewickelt wird, weisen im Bereich der Statorpole Hinterschnitte auf, damit der Wickeldraht nicht von den Statorpolen abgleitet. Aufgrund dieser Hinterschnitte sind die Statoren grösser dimensioniert und haben daher eine hohes Gesamtgewicht.

Dieses hohe Gesamtgewicht ist insbesondere bei Elektromotoren, bei denen jeweils zwischen zwei Statorpolen ein Permanentmagnet angeordnet ist, noch problematischer, da die Permanentmagnete ebenfalls ein hohes Eigengewicht aufweisen. Ein derartiger Elektromotor ist beispielsweise aus der EP-PS 0 564 516 bekannt.

Aus der EP-A-605247 ist ein Elektromotor bekannt, der einen Stator mit einem zentralen Aufnahmebereich für einen Stator aufweist. Der Stator weist mehrere den Aufnahmebereich in radialer Richtung begrenzende Statorpole auf. Auf jeden dieser Statorpole ist ein dielektrisches Stützelement aufsteckbar, das der Aufnahme eines Wicklungsdrahtes dient und ein Abgleiten des Wicklungsdrahtes in den Aufnahmebereich hinein verhindert. Beide freien Enden der Stützelemente sind mit einer Aufnahmeöffnung versehen, in die ein ringförmiges Isolationselement einsetzbar ist, mit dessen Hilfe die Lage der auf den Statorpolen aufgesteckten Stützelemente fixiert wird.

Der Erfindung liegt die Aufgabe zugrunde einen Elektromotor zu schaffen, bei dem trotz Einhaltung eines geringen Gewichts der Wickeldraht in den Stator einwickelbar ist, ohne dass der Wickeldraht von den Statorpolen abgleitet. Im weiteren zeigt die Erfindung eine einfache und wirtschaftliche Lösung zur Befestigung von Permanentmagneten auf. Die Lösung dieser Aufgabe erfolgt durch einen Elektromotor, welcher die im kennzeichnenden Abschnitt des Patentanspruchs 1 angeführten Merkmale aufweist.

Die erfindungsgemässe Ausgestaltung des Elektromotors, bei dem an jeder Stimseite des Stators ein Isolationselement und bei dem zwischen den zur Hauptachse des Aufnahmebereiches des Stators sowie zueinander im wesentlichen parallel verlaufenden Seitenflächen der Statorpolpaare und der Statorwicklung jeweils ein dielektrisches Stützelement angeordnet ist, das mit wenigstens einem der Isolationselemente zusammenwirkt, ermöglicht das maschinelle Einbringen des Wickeldrahtes in den Stator, ohne dass dieser von den voneinander abgewandten Seitenflächen der Statorpole abgleitet.

Die Stützelemente erstrecken sich wenigstens teilwelse entlang einer von Kontaktflächen der Statorpole gebildeten Hüllkurve. Das Stützelement erstreckt sich dabei im wesentlichen senkrecht zur Hauptachse des Aufnahmebereiches des Stators und bildet einen zur Hauptachse des Aufnahmebereiches des Stators gerichteten, konkaven Aufnahmebereich, der beim maschinellen Einbringen des Wicklungsdrahtes dessen Abgleiten von den Statorpolen verhindert.

Ein einfaches Einsetzen und ein gutes Ausrichten der Stützelemente in dem Stator wird vorteilhafterweise dadurch erreicht, dass die Stützelemente und eines der beiden Isolationselemente einstückig ausgebildet sind.

Aus Gründen der Isolation und des geringen Gewichts sind vorzugsweise die Stützelemente aus Kunststoff gebildet.

In Anlehnung an die weitere Aufgabenstellung wird der schnelle und einfache Einbau eines Permanentmagneten in den Stator vorteilhafterweise dadurch gewährleistet, dass von einem der Isolationselemente wenigstens zwei, der Aufnahme jeweils einem der Permanentmagnete dienende Träger abragen. Beim Aufsetzen der Isolationselemente auf die Stirnseiten des Stators werden die von den Trägern gehaltenen Permanentmagnete in den Stator eingeschoben und dort positioniert.

Um eine formschlüssige Verbindung zwischen den Permanentmagneten und den Trägem erreichen zu können, ist zweckmässigerweise jeder Träger von zwei parallel zueinander verlaufenden, dielektrischen Trägerelementen gebildet, die zwischen den Seitenflächen der Statorpolpaare und den Permanenmagneten angeordnet sind.

Beispielsweise sind die jeweils ein Paar bildenden Trägerelemente an ihren freien Enden über einen Verbindungssteg miteinander verbunden. Die zwischen jeweils zwei Trägerelementen angeordneten Permanentmagnete sind auf diese Weise gegenüber den Trägerelementen axial festgelegt.

Aus Gründen der Isolation und des geringen Gewichts sind vorzugsweise die Trägerelemente aus Kunstoff gebildet.

Jeder der Träger, die der Aufnahme und der Zentrierung eines Permanentmagneten in dem Stator dienen, kann beispielsweise auch von zwei an ihren freien Enden offenen Aufnahmekammern gebildet werden, die sich parallel zur Hauptachse der Aufnahmekammer des Stators nur teilweise über die Gesamtlänge des Stators erstrecken. Jeweils eine der koaxial zueinander angeordneten Aufnahmekammem ist dabei an einem der beiden Isolationselemente angeordnet. Im montierten Zustand nehmen die Aufnahmekammer die Permanentmagnete wenigstens teilweise auf..

Die Erfindung wird anhand von Zeichnungen, die ein Ausführungsbeispiel wiedergeben näher erläutert. Es zeigen:
- Fig. 1: Einen Schnitt durch einen erfindungsgemässen Elektromotor;
- Fig.2: ein vergrösserter Ausschnitt der beiden Isolationselemente im Bereich eines nicht dargestellten Statorpolpaares, ohne Statorwicklung.

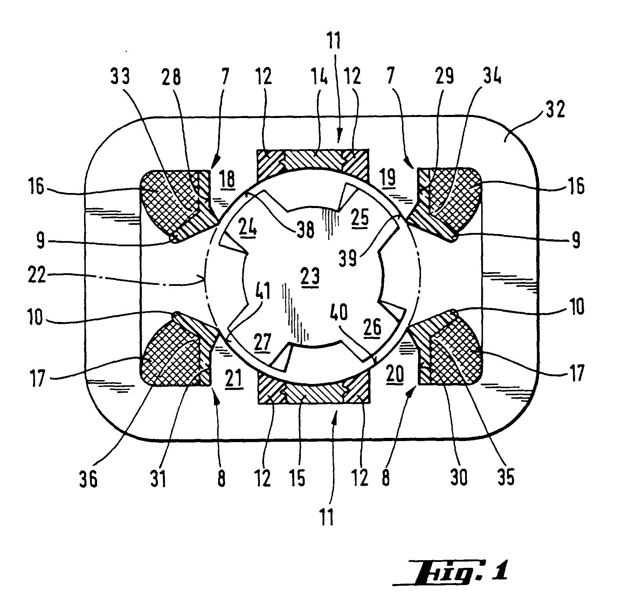

Der in Fig. 1 dargestellte, aus einem Blechpaket bestehende Stator 32 eines erfindungsgemässen Elektromotors weist einen zentralen Aufnahmebereich auf, in den vier paarweise angeordnete Statorpole 18, 19, 20, 21 ragen. Innerhalb einer Hüllkurve 22, die von zum Zentrum des Stators 32 weisenden Kontaktflächen 38, 39, 40, 41 der Statorpole 18, 19, 20, 21 gebildet wird, befindet sich ein Rotor 23 mit vier Rotorpolen 24, 25, 26, 27.

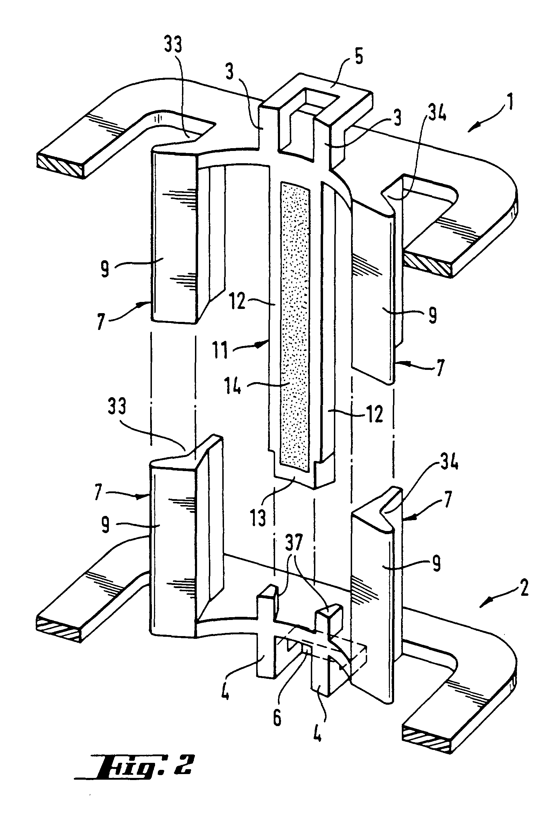

Wie in der Fig. 2 dargestellt ist, ist auf beiden Stimseiten des Stators 32 jeweils ein Isolationselement 1, 2 aufsetzbar, von denen Stützelemente 7, 8 in das Innere des Stators 32 abragen. Die Stützelemente 7, 8 erstrecken sich über die Hälfte der Gesamtlänge des Stators 32. Wenn beide Isolationselemente 1, 2 an den Stirnseiten des Stators 32 anliegen, wirken die Stirnseiten der freien Endbereiche der Stützelemente 7, 8 zusammen.

Die Form der Isolationselemente 1, 2 entspricht im wesentlichen, der stirnseitigen Projektionsfläche des Stators 32. An der dem Stator 32 abgewandten Seite weisen die im wesentlichen ringscheibenförmigen Isolationselemente 1, 2 Zungen 5, 6 auf, die über Stege 3, 4 von den Isolationselementen 1, 2 beabstandet angeordnet sind. Die Stege 3, 4 erstrecken sich im wesentlichen parallel zur Hauptachse des Aufnahmebereiches des Stators 32 und sind im Bereich der von den Statorpolen 18, 19, 20, 21 gebildeten Hüllkurve 22 angeordnet. Die Zungen 5, 6 erstrecken sich im wesentlichen parallel zu den Isolationselementen 1, 2 radial nach aussen.

Jeweils eine von einem Wickeldraht gebildete Statorwicklung 16, 17 umgibt ein Statorpolpaar 18, 19; 20, 21 und die von den Zungen 5, 6 überdeckten Bereiche der Isolationselemente 1, 2. Zwischen den entlang der Hauptachse des Aufnahmebereiches des Stators 32 im wesentlichen parallel zueinander verlaufenden Seitenflächen 28, 29, 30, 31 der Statorpolpaare 18, 19; 20, 21 und der Statorwicklung 16, 17 sind dielektrische Stützelemente 7, 8 angeordnet, die mit den Isolationselementen 1, 2 einstückig verbunden sind. Die Stützelemente 7, 8 bestehen aus einem nichtmagnetischen und nichtmetallischen Material, beispielsweise aus Kunststoff.

In einer senkrecht zur Längsachse des Stators 32 verlaufenden Richtung weisen die Stützelemente 7, 8 einen erweiterten Bereich 9, 10 auf, der sich im wesentlichen teilweise entlang der von den Statorpolen 18, 19, 20, 21 gebildeten Hüllkurve 22 erstreckt. Mit Hilfe dieser erweiterten Bereiche 9, 10 werden zur Längsachse des Stators 32 gerichtete, konkave Aufnahmebereiche 33, 34, 35, 36 geschaffen, die bei einem maschinellen Einbringen des Wicklungsdrahtes dessen Abgleiten von den Seitenflächen 28, 29, 30, 31 der Statorpole 18, 19, 20, 21 verhindem.

An dem Isolationselement 1 sind parallel zu den Stützelementen 7 verlaufende Träger 11 angeordnet. Die Fig. 2 zeigt nur die Isolationsplatte 1 mit den Stützelementen und einen Träger 11. Jeder Träger 11 dient der Aufnahme jeweils eines Permanentmagneten 14, 15 und ragt senkrecht von der dem Stator 32 zugewandten Seite des Isolationselementes 1 ab. Der Träger 11 setzt sich zusammen aus zwei parallel zueinander verlaufenden dielektrischen Trägerelementen 12, die an ihren freien Endbereichen über einen Verbindungssteg 13 miteinander verbunden sind. Die Trägerelemente 12 erstrecken sich zwischen den Seitenflächen der Statorpolpaare 18, 19; 20, 21 und den Permanentmagneten 14, 15 über die Gesamtlänge des Stators 32. Jeder der Permanentmagnete 14, 15 erstreckt sich ebenfalls über die Gesamtlänge des Stators 32.
Das Isolationselement 1, die an dem Träger 11 angeordneten Trägerelemente 12 und der Verbindungssteg 13 bilden zusammen einen Aufnahmebereich, deren Form im wesentlichen der Aussenkontur der Permanentmagnete 14, 15 entspricht. Mit Hilfe einer formschlüssig mit einer Aussenkontur der Permanentmagnete 14, 15 zusammenwirkenden Innenkontur der Trägerelemente 12 wird ein Herausfallen der Permanentmagnete 14, 15 aus den Trägerelementen 12 verhindert.

Die Trägerelemente 12 sind im Bereich der Verbindungsstege 13 formschlüssig mit Führungsbereichen 37 der weiteren Isolationselemente 2 in Verbindung bringbar, wenn beide Isolationselemente 1, 2 auf die Stirnseiten des Stators 32 aufgesetzt werden.

Die Isolationselemente 1, 2, die Träger 11 und die Stützelemente 7, 8 sind aus nichtmagnetischem und nichtmetallischem Material, beispielsweise aus Kunststoff gebildet.

## Patentansprüche

1. Elektromotor mit einem, einen zentralen Aufnahmebereich für einen Rotor (23) aufweisenden Stator (32), wenigstens vier paarweise in den zentralen Aufnahmebereich ragenden Statorpolen (18, 19, 20, 21), jeweils einer ein Statorpolpaar (18, 19; 20, 21), sowie Teile der Isolationselemente (1, 2) umgebenden Statorwicklung (16, 17) und einem Permanentmagneten (14, 15) zwischen den Statorpolpaaren (18, 19; 20, 21) **dadurch gekennzeichnet, dass** an jeder Stimseite des Stators (32) ein Isolationselement (1, 2) angeordnet ist und dass zwischen den zur Hauptachse des Aufnahmebereiches des Stators (32) sowie zueinander im wesentlichen parallel verlaufenden Seitenflächen (28, 29, 30, 31) der Statorpolpaare (18, 19; 20, 21) und der Statorwicklung (16, 17) jeweils ein dielektrisches Stützelement (7, 8) angeordnet ist, das mit wenigstens einem der Isolationselemente (1, 2) zusammenwirkt und sich wenigstens teilweise entlang einer von Kontaktflächen (38, 39, 40, 41) der Statorpole (18, 19, 20, 21) gebildeten Hüllkurve (22) erstrecken.

2. Motor nach Anspruch 2, **dadurch gekennzeichnet, dass** die Stützelemente (7, 8) und eines der beiden Isolationselemente (1, 2) einstückig ausgebildet sind.

3. Motor nach Anspruch 1 oder 2, **dadurch gekennzeichnet, dass** die Stützelemente (7, 8) aus Kunststoff gebildet sind.

4. Motor nach einem der Ansprüche 1 bis 3, **dadurch gekennzeichnet, dass** von einem der Isolationselemente (1, 2) wenigstens zwei, der Aufnahme jeweils einem der Permanentmagnete (14, 15) dienende Träger (11) abragen.

5. Motor nach Anspruch 4, **dadurch gekennzeichnet, dass** jeder Träger (11) von zwei parallel zueinander verlaufenden, dielektrischen Trägerelementen (12) gebildet ist, die zwischen den Seitenflächen (28, 29, 30, 31) der Statorpolpaare (18, 19; 20, 21) und den Permanenmagneten (14, 15) angeordnet sind.

6. Motor nach Anspruch 5, **dadurch gekennzeichnet, dass** die Trägerelemente (12) aus Kunstoff gebildet sind.

## Claims

1. Electric motor with a stator (32) incorporating a central locating zone for a rotor (23), at least four stator poles (18, 19, 20, 21) which project pairwise into the central locating zone, in each case a stator winding (16, 17) surrounding a stator pole pair (18, 19; 20, 21) and parts of the insulating elements (1, 2), and a permanent magnet (14, 15) between the stator pole pairs (18, 19; 20, 21), **characterised in that** arranged on each end face of the stator (32) is an insulating element (1, 2) and that arranged between the lateral surfaces (28, 29, 30, 31), of the stator pole pairs (18, 19; 20, 21) and of the stator winding (16, 17), which surfaces extend substantially parallel to the principal axis of the locating zone of the stator (32) and to one another, is a respective dielectric supporting element (7, 8) which cooperates with at least one of the insulating elements (1, 2) and extends at least in part along a generating curve of an envelope (22) formed by contact surfaces (38, 39, 40, 41) of the stator poles (18, 19, 20, 21).

2. Motor according to claim 1, **characterised in that** the supporting elements (7, 8) and one of the two insulating elements (1, 2) are of integral construction.

3. Motor according to claim 1 or 2, **characterised in that** the supporting elements (7, 8) are made out of plastic.

4. Motor according to any one of claims 1 to 3, **characterised in that** at least two brackets (11) jut out from one of the insulating elements (1, 2) and serve to locate a respective one of the permanent magnets (14, 15).

5. Motor according to claim 4, **characterised in that** each bracket (11) is formed by two dielectric bracket elements (12) which run parallel to one another and are arranged between the lateral surfaces (28, 29, 30, 31) of the stator pole pairs (18, 19; 20, 21) and the permanent magnets (14, 15).

6. Motor according to claim 5, **characterised in that** the bracket elements (12) are made out of plastic.

## Revendications

1. Moteur électrique comportant un stator (32) qui présente une zone centrale de réception pour un rotor (23), au moins quatre pôles de stator (18, 19, 20, 21) s'engageant deux par deux dans la zone centrale de réception, un enroulement de stator (16, 17) entourant une paire de pôles de stator (18, 19 ; 20, 21) ainsi que des parties des éléments d'isolation (1, 2), et comportant un aimant permanent (14, 15) entre les paires de pôles de stator (18, 19 ; 20, 21), **caractérisé en ce qu'**un élément d'isolation (1, 2) est disposé sur chaque côté frontal du stator (32) et **en ce qu'**il est disposé, entre les faces frontales (28, 29, 30, 31) des paires de pôle de stator (18, 19 ; 20, 21), qui s'étendent sensiblement parallèlement à l'axe principal de la zone de réception du stator (32) ainsi qu'entre elles, et l'enroulement de stator (16, 17), un élément d'appui diélectrique (7, 8) qui coopère avec au moins l'un des éléments d'isolation (1, 2) et qui s'étend au moins en partie le long d'une enveloppante (22) formée par des surfaces de contact (38, 39, 40, 41) des pôles de stator (18, 19, 20, 21).

2. Moteur selon la revendication 1, **caractérisé en ce que** les éléments d'appui (7, 8) et l'un des deux éléments isolants (1, 2) sont réalisés d'une seule pièce.

3. Moteur selon la revendication 1 ou 2, **caractérisé en ce que** les éléments d'appui (7, 8) sont en matière plastique.

4. Moteur selon l'une des revendications 1 à 3, **caractérisé en ce qu'**au moins deux supports (11), qui servent à recevoir chacun l'un des aimants permanents (14, 15), dépassent de l'un des éléments d'isolation (1, 2).

5. Moteur selon la revendication 4, **caractérisé en ce que** chaque support (11) est formé par deux éléments porteurs (12) diélectriques qui s'étendent parallèlement entre eux et qui sont disposés entre les surfaces latérales (28, 29, 30, 31) des paires de pôles de stator (18, 19 ; 20, 21) et les aimants permanents (14, 15).

6. Moteur selon la revendication 5, **caractérisé en ce que** les éléments porteurs (12) sont en matière plastique.
